# EUROPÄISCHE PATENTSCHRIFT

(11) **EP 0 980 514 B1**
(45) Veröffentlichungstag und Bekanntmachung des Hinweises auf die Patenterteilung: **07.01.2004**
(21) Anmeldenummer: 98924251.6
(22) Anmeldetag: 30.04.1998
(51) Int. Cl.: G01M 13/02

(54) **VORRICHTUNG ZUR KOMPLETTVERMESSUNG VON GETRIEBEVERZAHNUNGEN EINSCHLIESSLICH DER ZAHNFLANKENTOPOGRAPHIE**
DEVICE FOR COMPLETE MEASURING OF GEAR TOOTHING, INCLUDING TOOTH FLANK TOPOGRAPHY
DISPOSITIF POUR LA MESURE COMPLETE DES DENTURES D'ENGRENAGES, Y COMPRIS DE LA TOPOGRAPHIE DES FLANCS DES DENTS

(30) Priorität: 07.05.1997 DE 19719249
(43) Veröffentlichungstag der Anmeldung: 23.02.2000
(73) Patentinhaber: Ford Global Technologies, Inc., Dearborn, Michigan 48126 (US)
(72) Erfinder: HOPF, Guido, D-40789 Monheim (DE)
(74) Vertreter: Bonsmann, Manfred, Dipl.-Ing.
(86) Internationale Anmeldenummer: PCT/EP1998/002555
(87) Internationale Veröffentlichungsnummer: WO 1998/050772

(56) Entgegenhaltungen:
- DE-C- 19 519 429
- US-A- 3 044 176
- US-A- 4 261 198

## Beschreibung

Die Erfindung bezieht sich auf eine Vorrichtung zum Messen der Zahnflankentopographie von Getriebeverzahnungen der im Oberbegriff des Patentanspruches 1 erläuterten Art.

Aus der DE 195 19 429 C1 ist eine Vorrichtung zum Messen der Zahnflankentopographie von Getriebeverzahnungen bekannt, bei der nach der Einflankenwälzprüfung ein Meßrad mit einem zu prüfenden Zahnrad abwälzbar ist und wobei eine Einrichtung zur Aufzeichnung und Auswertung des dabei am zu prüfenden Zahnrad auftretenden Drehfehlerverlaufes vorgesehen ist.

Das aus dieser Schrift bekannte Meßrad weist unterschiedlich gestaltete Zähne mit jeweils besonderen Zahnflankenformen auf. Je nach Überdeckungsgrad der zu vermessenden Getriebeverzahnung sind Meßzähne und ggf. Stützzähne vorgesehen, wobei letztere soweit in ihrem verzahnungseingriff zurückgenommen sind, daß sie die entsprechende Messung an den einzelnen Meßzähnen nicht beeinträchtigen. Die Eingriffs-Zahnflanken der Meßzähne sind in bestimmten Bereichen soweit flächenmäßig abgetragen, daß erhabene radiale Meßspuren in axial versetzter Anordnung und/oder erhabene axiale Meßspuren in radial versetzter Anordnung und/oder schräg über die Zahnflanke verlaufende Meßspuren verbleiben. An aufeinanderfolgenden Meßzähnen sind radiale Meßspuren in unterschiedlichen axialen Abständen bzw. axiale Meßspuren in unterschiedlichen Höhenabständen bzw. schräg verlaufende Meßspuren unterschiedlich angeordnet. Die Zahnverhältnisse zwischen dem Meßzahnrad und dem zu prüfenden Rad sind so gewählt, daß bei mehrmaligem Umlauf bestimmte (ggf. alle) Zähne des zu prüfenden Zahnrades mit den unterschiedlichen Meßspuren in Eingriff kommen.

Die Aufgabe der vorliegenden Erfindung ist es, aufbauend auf der oben erwähnten Vorrichtung zum Messen der Zahnflankentopographie von Getriebeverzahnungen eine Vorrichtung zu schaffen, die in einer Aufspannung beide Flanken eines zu prüfenden Zahnrades in kurzer Zeit vermessen kann und somit beim Einsatz in der Produktion von Zahnrädern unmittelbar anwendbar ist, um bei durch das Vermessen festgestellten Abweichungen von der gewünschten Zahnflankentopographie Korrekturmaßnahmen an den Bearbeitungsmaschinen vorzunehmen.

Gemäß der Erfindung wird diese Aufgabe gelöst, indem an einer Vorrichtung zum Messen der Zahnflankentopographie von Getriebeverzahnungen der im Oberbegriff des Patentanspruches 1 erläuterten Art die im Kennzeichenteil des Patentanspruches 1 aufgezeigten Maßnahmen vorgesehen werden.

Zweckmäßige Ausgestaltungen der Erfindung ergeben sich aus den Unteransprüchen.

Dadurch, daß eine vorzugsweise innen- oder außengerade-, oder schrägverzahnte, zu prüfende Verzahnung mit zwei auf der anliegenden Zahnflanke mit Meßspuren versehenen speziellen Meßverzahnungen jeweils einflankig und bei konstanter Achslage gegenüber diesen abwälzt, von denen die eine Meßverzahnung angetrieben und die andere abgebremst wird, jede der drei die Verzahnungen mit einem hochauflösenden Drehwinkelgeber gekoppelt ist und mindestens zwei der drei Drehwinkelgeber, vorzugsweise die der beiden Meßräder mit einer Drehwinkellageerkennung ausgestattet sind, können neben Teilungsfehlern und Zahnflankentopographien einzelner Rechtsund Linksflanken gleichzeitig auch die lokalen Zahndicken einzelner Zähne, ihre radialen Lageabweichungen und andere von beiden einander gegenüberliegenden Zahnflanken abhängige Verzahnungsmeßgrößen erfaßt werden.

Die Erfindung wird anhand der beigefügten Zeichnungen beispielhaft näher erläutert. Es zeigen:
- Fig. 1: eine Prinzipskizze der erfindungsgemäßen Vorrichtung zur topographischen Vermessung aller Rechts- und Linksflanken von Getriebeverzahnungen am Beispiel von Stirnrädern;
- Fig. 2: eine schematische Darstellung der Meßwerterfassung, Weiterverarbeitung und Ausgabe aller Verzahnungsmeßgrößen;
- Fig. 3: das Prinzip der Zuordnung einzelner Drehwegfehler zu eindeutig definierten Meßpunkten auf den Zahnflanken des zu prüfenden Zahnrades;
- Fig. 4: einen vertikalen Schnitt durch eine ausgeführte Konstruktion der erfindungsgemäßen Vorrichtung;
- Fig. 5: eine Ausführungsform der erfindungsgemäßen Vorrichtung zum topographischen Vermessen von Kegelrädern;
- Fig. 6: eine Ausführungsform der erfindungsgemäßen Vorrichtung zum Vermessen von Verzahnungen auf Wellen; und
- Fig. 7a-h: eine Übersicht über einige mögliche Anordnungen der Meßräder zur Vermessung weiterer bekannter Verzahnungsarten.

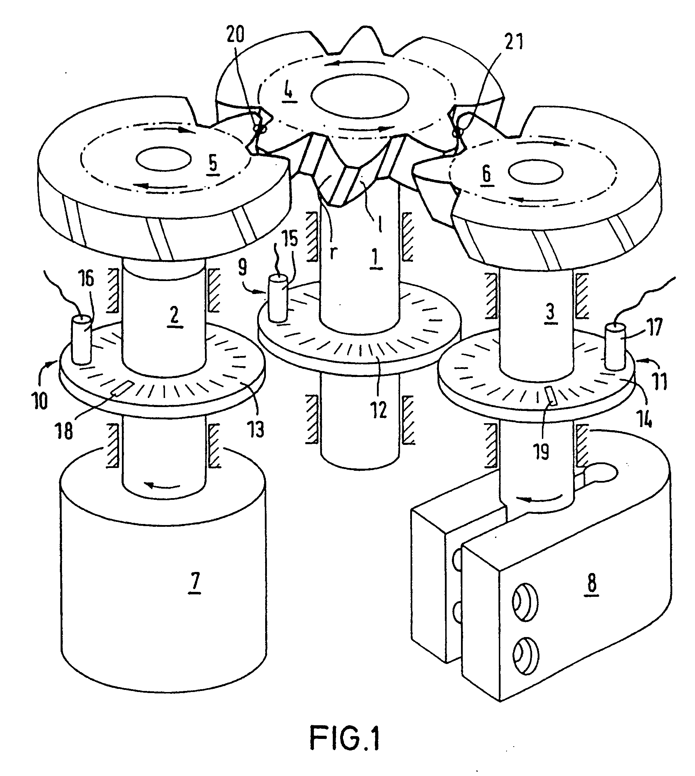

Die Vorrichtung zum Messen der Zahnflankentopographie von Getriebeverzahnungen besteht im wesentlichen aus drei Wellen 1, 2, und 3 in einer für den Verzahnungstyp geeigneten, während der Messung unveränderlichen Lage, von denen die erste Welle 1 das zu prüfende verzahnte Bauteil, im dargestellten Fall das Zahnrad 4, aufnimmt und die Wellen 2 und 3 die Meßräder 5 und 6 aufnehmen bzw. entsprechende Meßverzahnungen fest auf sich tragen. Fig. 1 zeigt eine mögliche Meßanordnung für Stirnräder, bei der diese drei Wellen parallel zueinander angeordnet sind.

Die Welle 2 des einen Meßrades 5 wird hierbei über einen Motor 7 angetrieben und die Welle 3 des Meßrades 6 über eine Bremse 8 abgebremst. Zusätzlich kann auch die Welle 1 mit einer Bremse (hier nicht dargestellt) ausgestattet sein, um ein Abheben der im Kraftfluß liegenden Zahnflanken während der Messung sicher auszuschließen.

Alle drei Wellen 1, 2, und 3 sind mit Drehwinkelgebern 9, 10 und 11 verbunden, die im wesentlichen aus einer Drehwinkelgeberscheibe 12, 13 und 14 (z.B. Radialstrichscheibe), einem geeigneten Drehwinkelsensor 15, 16, und 17 (z.B. Photozelle) und der zugehörigen Signalverarbeitung (nicht dargestellt) bestehen.

An den Drehwinkelgeberscheiben 13 und 14 der beiden Meßradwellen 2 und 3 sind außerdem Referenzdrehwinkelindikatoren 18 und 19 zur Erfassung der jeweiligen Drehlage der Meßräder 5 und 6 gegenüber festen Bezugspunkten der Vorrichtung (z.B. gegenüber den Positionen der jeweiligen Drehwinkelsensoren 16 und 17) vorgesehen.

An dem zu prüfenden Zahnrad 4 und den Meßrädern 5 und 6, die sowohl gerade- als auch schrägverzahnt sein können, sind die miteinander in Eingriff stehenden Zahnflanken bei 20 und 21 angedeutet und die entsprechenden Drehrichtungen durch Pfeile angegeben.

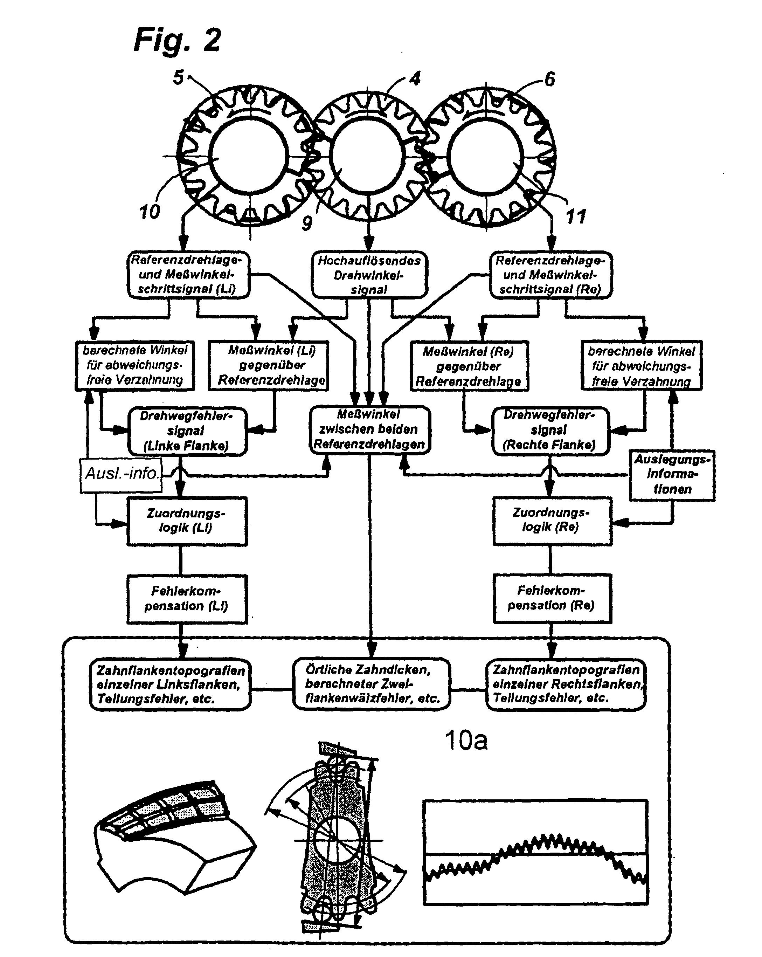

In Fig. 2 ist die Meßwerterfassung der Vorrichtung sowie die Weiterverarbeitung der Meßwerte zur Ausgabe sämtlicher Verzahnungsmeßgrößen mit den verschiedenen Erfassungsschritten schematisch dargestellt. Die durch entsprechende Bauteile oder Software-Routinen durchzuführenden Schritte sind durch schriftliche Erläuterungen bezeichnet. Das Diagramm gibt die logische Verknüpfung dieser Schritte beim Vermessen eines zu prüfenden Zahnrades wieder:

Die Erfassung der Verzahnungsfehler erfolgt in der oben beschrieben Anordnung zunächst für alle Rechts- und Linksflanken des zu prüfenden Zahnrades 4 getrennt voneinander in festen über Impulsschritte der Drehwinkelgeber 10 und 11 definierten Drehwegschritten der Meßräder 5 (für die Messung der linken Flanken) und 6 (für die Messung der rechten Flanken). Über die mit schmalen Meßspuren auf den Zahnflanken versehenen Meßradzähne, die jeweils einzeln mit dem zu prüfenden Zahnrad 4 im Eingriff sind, wobei sie durch das Abwälzen verschiebliche Berührpunkte mit den Prüflingszahnflanken bilden, und über die bekannte Lage dieser Punkte gegenüber den Referenzdrehwinkelindikatoren 18 und 19 sind bezüglich Durchmesser und Breitenkoordinate eindeutige Meßstellen auf den Prüflingszahnflanken definiert.

Zur Erfassung einzelner Verzahnungsfehler wird ausgehend von einem für alle drei Drehwinkelgeber gemeinsamen Startpunkt für diese vorgegebenen Meßstellen bzw. Drehwegschritte der zugehörige Drehweg des zu prüfenden Zahnrades ermittelt, der sich gemäß dem Zähnezahlverhältnis zwischen den Rädern bei abweichungsfreier Verzahnung ergeben würde. Dieser wird entsprechend der hohen Auflösung des Drehwinkelgebers 9 des zu prüfenden Zahnrades 4 in einen Nennwert für die Anzahl der Drehgeberimpulse zwischen dem Startpunkt und der betrachteten Meßstelle umgerechnet. Aus der Differenz zwischen diesem Nennwert und dem mit Hilfe des Drehwinkelgebers 9 tatsächlich gemessenen Istwert der Drehgeberimpulse folgt der örtliche Drehwegfehler der zu prüfenden Verzahnung bzw. nach Umrechnung mit Hilfe des Grundkreishalbmessers dieser Verzahnung folgen daraus örtliche Zahnflankenformabweichungen im Stirnschnitt.

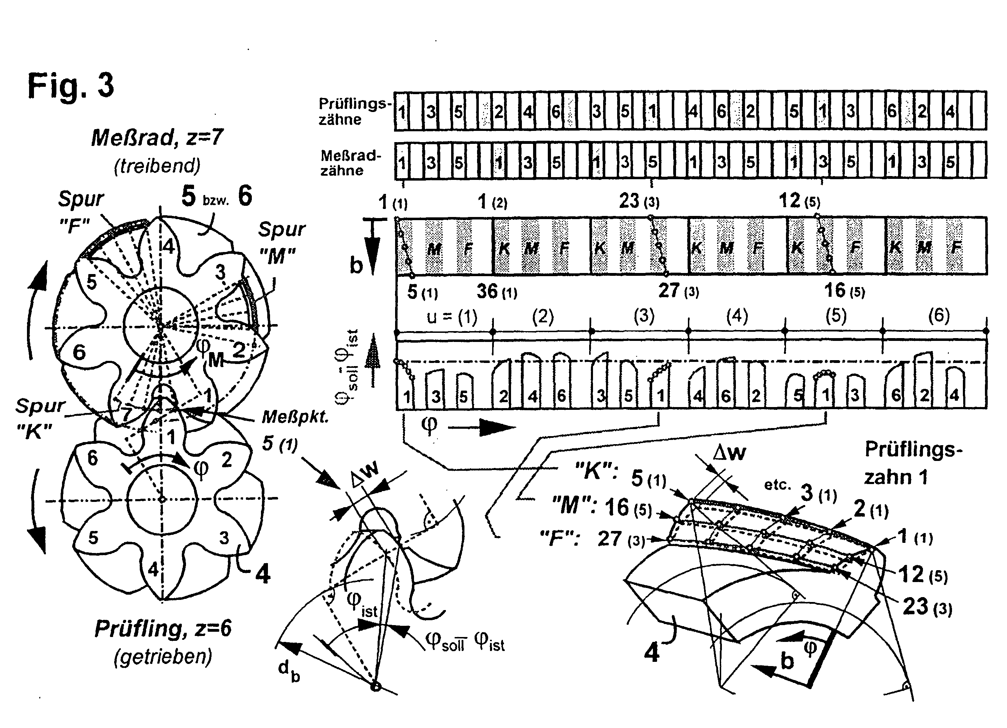

Die Zuordnung der bei jeder Meßradumdrehung an den einzelnen Meßstellen des Meßrades 5 bzw. 6 ermittelten Drehwegfehler bzw. örtlichen Zahnflankenformabweichungen zu eindeutig definierten Punkten auf den Zahnflanken des zu prüfenden Zahnrades 4 geschieht mit Hilfe der durch den gewählten Meßaufbau vorgegebenen Zuordnungslogik, die als Prinzip in Fig. 3 gezeigt ist und weiter unten näher erläutert wird. Hierzu wird auf bestimmte Auslegungsinformationen des Meßrades (z.B. Zähnezahlen und Positionen der Meßspuren auf den Meßradzahnflanken), des zu prüfenden Zahnrades (z.B. Zähnezahl und Geometrie) und der Meßanordnung (z.B. Meßachsabstand zwischen Meßrad und zu prüfendem Zahnrad bei paralleler Achslage) zurückgegriffen.

Die Messung erfolgt vorzugsweise über mindestens einen kompletten, von der Meßrad- und der Prüflingszähnezahl abhängigen Meßzyklus, d.h. über so viele Umdrehungen des Meßrades, wie benötigt werden, um alle entsprechend der gewählten Auslegung möglichen Paarungen von Meßrad- und Prüflingszähnen einmal zu durchlaufen. Systematische Meßfehler aus der Vorrichtung, wie z.B. Abweichungen der Meßspurflanken von ihrer Sollage, bei der diese mit gedachten idealen Evolventen des Meßrades zusammenfallen, lassen sich über eine Kontrollmessung z.B. mittels eines abweichungsfrei gefertigten Prüfrades ermitteln und für alle weiteren Messungen durch rechnerische Überlagerung mit den pro Meßradumdrehung gemessenen Werten zuverlässig kompensieren.

Nach erfolgter Zuordnung aller einzelnen Meßwerte eines Meßzyklus zu den entsprechend der Zuordnungslogik festgelegten Meßstellen auf dem zu prüfenden Zahnrad liegen die Meßwerte der betrachteten Rechts- und Linksflanken jeweils auf einem Meßgitter vor und lassen sich mit Hilfe geeigneter Grafikmodule als Abweichungsflächen oder sogenannte Zahnflankentopographien darstellen (siehe Schritt 10a in Fig. 2). Dies ermöglicht die rechnerische Analyse der Verzahnungsfehler im Hinblick auf den vorgesehenen Einsatzfall, die Ausgabe sämtlicher Einzelabweichungen, wie z.B. Zahnrichtungswinkelabweichungen, Profilwinkelabweichungen und Balligkeiten, sowie die Berechnung und Ausgabe aller weiteren üblichen Verzahnungsmeßgrößen einer Flankenrichtung, wie z.B. Einzelteilungsfehler, Summenteilungsfehler und Einflankenwälzfehler.

Durch Verwendung eines gemeinsamen Zählerstartpunktes für alle drei Drehgeber beschreiben alle einzelnen Meßergebnisse die Abweichungen des zu prüfenden Zahnrades jeweils in Relation zu einem für die betrachtete Flankenrichtung einheitlichen Bezugspunkt, an dem die Abweichungen per Definition gleich Null gesetzt sind. Sie lassen sich durch Addition oder Subtraktion eines für alle Meßpunkte dieser Flankenrichtung konstanten Überlagerungswertes rein rechnerisch auf jeden anderen Bezugspunkt einer beliebigen Zahnflanke des zu prüfenden Zahnrades umrechnen.

Zur Erfassung bzw. Berechnung derjenigen Verzahnungsmeßgrößen, die von beiden einander gegenüberliegenden Zahnflanken abhängen, wie z.B. örtliche Zahndicken, Kugelmaße, radiale Lageabweichungen der Zähne oder der üblicherweise nur mittels einer Zweiflankenwälzprüfung meßbaren Zweiflankenwälzfehler wird zusätzlich die Drehlage der beiden Meßräder 5, 6 zueinander bezogen auf das zu prüfende Zahnrad 4 genau erfaßt. Als Referenzdrehwinkelindikatoren werden auch für diese Messung idealerweise die in Fig. 1 dargestellten Markierungen 18 und 19 der beiden Meßräder 5 und 6 verwendet, deren genaue Lage gegenüber einer als Referenzdrehlage ausgewählten beliebigen Meßstelle der jeweiligen Flankenrichtung des zu prüfenden Zahnrades für beliebige Winkelstellungen rechnerisch bestimmt werden kann.

Mit Hilfe des hochauflösenden Drehwinkelsignals vom Drehwinkelgeber des zu prüfenden Zahnrades wird so der tatsächliche Winkel zwischen den Referenzdrehlagen der beiden Flankenrichtungen und damit über die Abweichungsmessungen aller Rechts- und Linksflanken auch jeder andere Winkel einzelner Punkte an gegenüberliegenden Flanken des zu prüfenden Zahnrades genau erfaßt. Unter Berücksichtigung der notwendigen Auslegungsinformationen über die Meßräder, das zu prüfende Zahnrad sowie die Meßanordnung stehen so also die Bezugspunkte der Rechts- und Linksflanken in Beziehung zueinander. Dies ermöglicht die rechnerische Ermittlung aller oben genannten, von den sich gegenüberliegenden Zahnflanken abhängigen Verzahnungsmeßgrößen aus den topographischen Daten der einzelnen Zahnflanken.

Fig. 3 zeigt das Prinzip der Zuordnung einzelner Drehwegfehler zu eindeutig definierten Meßpunkten auf den Zahnflanken des zu prüfenden Zahnrades am Beispiel einer schrägverzahnten Stirnradpaarung. Das zu prüfende Zahnrad hat hierbei sechs Zähne, von denen jeder Zahn entlang einzelner Zahnrichtungsspuren am Kopf, in der Mitte und am Fuß vermessen werden soll. Für diese Meßaufgabe wird ein Meßrad mit 7 Zähnen verwendet, um beim Abwälzen über einen vollständigen Meßzyklus von hier insgesamt 6 Meßradumdrehungen alle Zähne des Prüflings einmal mit allen Zähnen des Meßrades in Eingriff zu bringen. Die Zähne 1, 3 und 5 des Meßrades sind mit Meßspuren der eingangs beschriebenen, bekannten Art auf den Zahnflanken versehen, von denen jeweils in Zahnrichtung abwälzend am Fuß von Zahn 1 die Spur "K" den Kopfbereich aller Prüflingszähne, in der Mitte von Zahn 3 die Spur "M" die Mitte aller Prüflingszähne und am Kopf von Zahn 5 die Spur "F" den Fußbereich aller Prüflingszähne vermißt. Die Zähne 2, 4, 6 und 7 des Meßrades sind als Transport- oder Stützzähne ausgeführt und auf der gesamten Flanke zurückgenommen, um im Bereich der Meßspuren eine eindeutige Flankenanlage sicherzustellen.

Der rechte mittlere Teil von Fig. 3 zeigt einen möglichen Drehwegfehler dieser Meßanordnung, also den Verlauf der in äquidistanten Drehwinkelschritten gemessenen Differenz zwischen Solldrehwinkeln und gemessenen Winkeln an den einzelnen in Umfangsrichtung hintereinanderliegenden Meßstellen des zu prüfenden Zahnrades gemäß der oben beschriebenen Auswertung. Zur anschaulichen Beschreibung der Zuordnungslogik ist hierbei vorausgesetzt, daß pro Meßradumdrehung 35+1=36 äquidistante Meßwerte, also 5 Werte pro Zahneingriff, aufgezeichnet werden. Zum Messen werden die beiden Zahnräder bei einflankiger Anlage zueinander abgewälzt, wodurch sich an den hier gewählten, in Zahnrichtung ausgerichteten Meßspurflanken in axialer Richtung wandernde Berührpunkte auf den Prüflingszahnflanken ergeben. Diese laufen in Abhängigkeit vom Schrägungswinkel bei der gewählten Anordnung und Drehrichtung der Räder von hinten nach vorne.

Die Messung beginnt mit dem Meßwert Nr. 1 auf der den Kopf von Prüflingszahn 1 vermessenden Spur "K", der hier auch als Bezugspunkt für die gesamte Messung gewählt ist und entsprechend dieser Definition die Abweichung Null aufweist. Nach Meßwert Nr. 5 kommt Spur "K" außer Eingriff. Von Meßwert Nr. 12 bis Nr. 16 befindet sich Spur "M" in Eingriff, welche bei der ersten Meßradumdrehung die Mitte von Prüflingszahn 3 vermißt. Die Meßwerte Nr. 23 bis Nr. 27 gehören zu Spur "F" und beschreiben bei dieser Umdrehung den Fuß von Prüflingszahn 5. Zwischen den Meßpunkten liegen jeweils sogenannte Transportpunkte Nr. 6 bis Nr. 11, Nr. 17 bis Nr. 22 und Nr. 28 bis Nr. 35, die nicht im Bereich einer Meßspur liegen und daher nicht zur Messung von Verzahnungsfehlern herangezogen werden können.

Nach einer Meßradumdrehung wiederholt sich dieser Zyklus mit neuen Zahnkombinationen entsprechend der Zuordnungslogik im Bild oben rechts. Dementsprechend ergeben sich die vollständigen Informationen der Zahnflankenformen beispielsweise für Prüflingszahn 1 für die Kopfspur "K" aus Meßradumdrehung 1, die Spur "M" in Zahnmitte aus Umdrehung 5 und die Fußspur "F" aus Umdrehung 3. Mit den zugehörigen Breiten- und Durchmesserkoordinaten der einzelnen Meßwerte liegt damit die Zuordnung einzelner Meßwerte zu festen Punkten auf den Zahnflanken der Prüflingszähne fest.

Nach einem vollständigen Meßzyklus von insgesamt 6 Meßradumdrehungen liegen alle Informationen der hier vermessenen Rechtsflanken einmal vor. Bei korrekter Aufzeichnung würde sich daher beim Weiterdrehen für die siebte Meßradumdrehung wieder derselbe Drehwegfehlerverlauf wie bei der ersten Meßradumdrehung ergeben. Natürlich gilt für andere Auslegungen und Meßspuranordnungen eine u.U. ganz andere Zuordnungslogik; diese ist aber aus der Auslegungsinformation der Meßräder und der Festlegung der Meßwinkelschritte immer eindeutig bestimmbar.

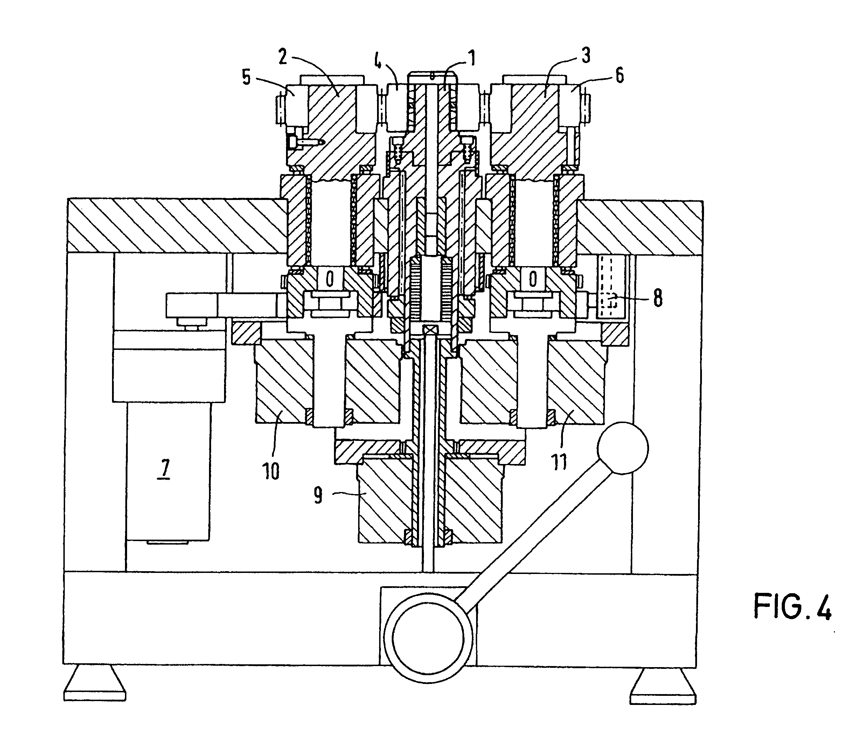

Fig. 4 zeigt eine konstruktive Ausführung einer Meßvorrichtung gemäß der Erfindung, bei der nur die zum Verständnis der Erfindung erforderlichen Bauteile mit Bezugszeichen-und zwar den gleichen wie in Fig. 1 - versehen sind.

Die Verwendung der erfindungsgemäßen Vorrichtung wird im nachfolgenden mit Hilfe der Figuren 1 und 4 erläutert:

Das Wesentliche der Erfindung ist, daß ein vollständiges Vermessen eines zu prüfenden Zahnrades 4 erfolgen kann, indem es gleichzeitig mit zwei Meßrädern 5 und 6 über eine bestimmte Anzahl von Umdrehungen abgewälzt wird. Die Achslagen der Meßräder gegenüber dem zu prüfenden Zahnrad richten sich nach der Art der zu vermessenden Verzahnung. Bei der Vermessung von Stirnrädern sind diese vorzugsweise parallel zur Achse des zu prüfenden Zahnrades angeordnet und schließen in Achsrichtung betrachtet mit dieser Achse einen bestimmten Winkel ein, der so gewählt ist, daß keine Überschneidungen zwischen den Meßrädern auftreten können. Prinzipiell sind zur Vermessung auch andere als parallele Achslagen zwischen dem zu prüfenden Zahnrad und den Meßrädern denkbar, wenn die Verzahnung des Meßrades dieser Achslage entsprechend gestaltet wird.

Da das Meßverfahren auf dem Prinzip der Einflankenwälzprüfung basiert, ist der Abstand der drei Zahnräder während des Meßvorgangs fixiert. Im Gegensatz zu den bekannten Einflankenmeßvorrichtungen sind die beiden Meßräder 5 und 6 speziell für die jeweilige Meßaufgabe ausgelegt, d.h. ihre Verzahnungsdaten einschließlich der Zähnezahl werden nach geeigneten Auslegungskriterien festgelegt. Die Meßräder sind mit Meßspuren auf den Zahnflanken versehen, die in Eingriff mit dem zu prüfenden Zahnrad 4 gelangen, um ein Erfassen der individuellen Zahnflankentopographie dieses Rades zu ermöglichen. Die Auslegung der Meßräder 5 und 6 erfolgt gemäß dem eingangs näher erläuterten Stand der Technik DE 195 19 429 C1.

Eines der Meßräder ist über einen Motor 7 angetrieben, der im dargestellten Fall über einen Zahnriemen mit der zugehörigen, das Meßrad aufnehmenden Welle 2 gekoppelt ist. Das andere Meßrad 6 sowie eventuell auch das zu prüfende Zahnrad 4 werden über eine Bremse 8 verzögert. Dadurch wird ein Vermessen der topographischen Informationen an beiden - den linken und den rechten - Flanken des zu prüfenden Zahnrades 4 gleichzeitig und in einer Aufspannung ermöglicht. Alle drei Zahnräder, das zu prüfende Zahnrad 4 und die Meßräder 5 und 6, müssen dazu auf getrennten Wellen 1, 2 und 3 angeordnet sein und diese Wellen 1, 2 und 3 müssen entsprechende Drehwinkelgeber 9, 10 und 11 aufweisen.

Die Analyse der lokalen Abweichungen und Fehler einzelner Zahnflanken einer Seite in Relation zueinander erfordert die Aufzeichnung der Daten in Bezug auf einen festen Lagebezugspunkt 18 bzw. 19 am jeweiligen Drehwinkelgeber 10 bzw. 11 des Meßrades. Wie bereits oben beschrieben, basiert das Meßverfahren auf einer Berechnung der jeweils zu erwartenden Drehlage des zu prüfenden Zahnrades 4 für eine vorgegebene Drehlage des Meßrades der zu prüfenden Seite unter der Annahme einer fehlerfreien Verzahnung mit idealen Evolventen (siehe Beschreibung zu Fig. 2). Die Differenz zwischen den Drehwinkeln, die für ideale Verhältnisse vorgegeben sind und denen, die durch die Messung aufgezeichnet werden, erlaubt die Berechnung örtlicher Abweichungen. Nach Sortierung der Meßwerte gemäß dem anhand von Fig. 3 beschriebenen Prinzip lassen sich diese als örtliche Abweichungen auf einzelnen Zahnflanken des zu prüfenden Zahnrades 4 in Relation zu dem gewählten Lagebezugspunkt und damit auch zu beliebigen anderen Punkten auf den Zahnflanken darstellen, wodurch Rückschlüsse auf sämtliche Verzahnungsfehler aller Rechts- und aller Linksflanken einschließlich der einzelnen Zahnflankentopographien möglich sind.

Zumindest ein Drehwinkelgeber, idealerweise der mit dem zu prüfenden Zahnrad 4 verbundene, ist mit einer hochauflösenden Meßvorrichtung versehen, die ein präzises Vermessen der auftretenden Abweichungen im Mikrometerbereich ermöglicht. Für die zwei anderen Drehwinkelgeber, idealerweise die der beiden Meßräder 5 und 6, kann die Anzahl der Impulse pro Umdrehung auch geringer gewählt werden, denn hiermit wird lediglich die Anzahl und die Lage der Meßpunkte am zu prüfenden Zahnrad festgelegt. Auch dann ist aber darauf zu achten, daß die Drehlagen dieser Impulse für die Meßaufgabe ausreichend genau sind. Werden diese Meßräder dagegen auch mit hochauflösenden Drehwinkelgebern bestückt, so kann die Reduzierung der Meßpunkte auf eine sinnvolle Anzahl z.B. auch computertechnisch durchgeführt werden. Es erfolgt dann eine Beurteilung der lokalen Drehwegfehler nur jeweils nach einer festgelegten Anzahl von Drehwinkelgeberimpulsen.

Zur Erfassung der von beiden einander gegenüberliegenden Zahnflanken abhängigen Verzahnungsmeßgrößen werden vorzugsweise dieselben Referenzdrehwinkelindikatoren 18 und 19 der beiden Meßräder 5 und 6 verwendet, die ja auch als Lagebezugspunkte für die Rechts- und Linksflanken zur Anwendung kommen. Damit kann bei jeder Messung auch eine drehwinkelmäßige Lageerfassung der beiden Meßräder zueinander erfolgen. Unter Berücksichtigung der Geometrie der Meßanordnung lassen sich hierüber die lokalen Zahndicken einzelner Zähne, ihre radialen Lageabweichungen und andere von Rechts- und Linksflanken gemeinsam abhängigen Details aus den lokalen Abweichungen einander gegenüberliegender Zahnflanken des zu prüfenden Zahnrades 4 feststellen.

Ein weiteres Merkmal der in Fig. 4 dargestellten Ausführungsform dieser Meßvorrichtung, das besonders zweckmäßig, aber in dieser Form für die Funktion der Vorrichtung nicht zwingend notwendig ist, ist eine entsprechende Lade- und Spannvorrichtung für das zu prüfende Zahnrad 4. Die Aufnahme-Klemmvorrichtung für das zu prüfende Zahnrad 4 kann auf der Basis von herkömmlichen Spannvorrichtungen aufgebaut sein, die z.B. als hydraulische oder mechanische Spreizaufnahmen ausgebildet sind. Der Belade- und Entladevorgang für das zu prüfende Zahnrad kann hierbei in Abhängigkeit von der jeweiligen Verzahnungsart z.B. durch eine geradlinige oder durch eine schraubenförmige Bewegung erfolgen. Daneben sind natürlich auch andere Ladebewegungen denkbar, bei denen die Achsen der Meßräder und des zu prüfenden Zahnrades aus einer Position, in der das Laden erfolgt, in die genaue Meßposition verschoben und dort durch eine geeignete Vorrichtung fixiert werden.

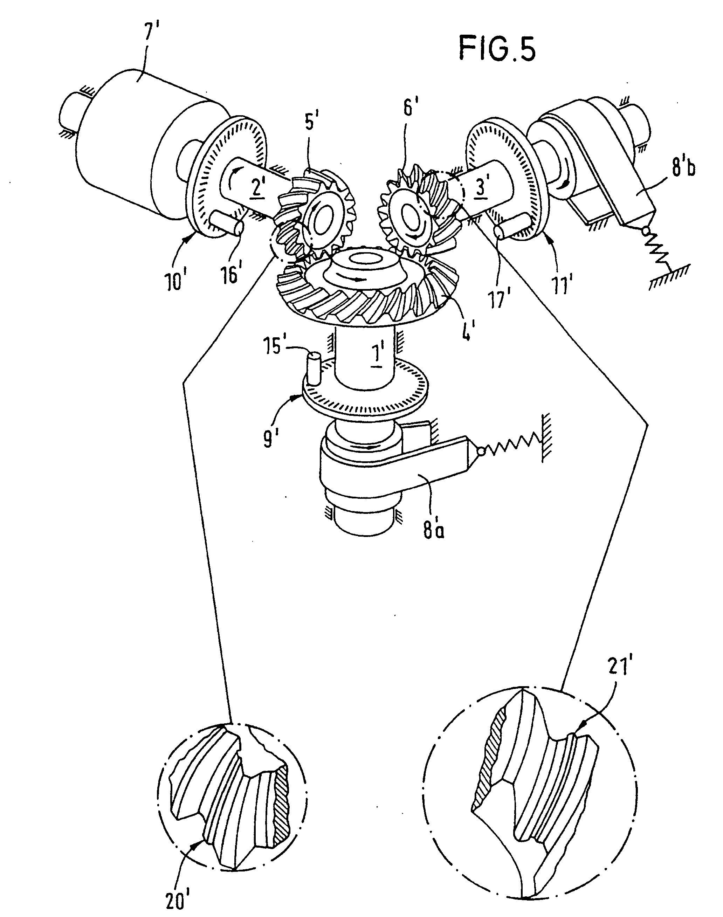

Fig. 5 zeigt eine Ausführungsform der erfindungsgemäßen Vorrichtung zum Vermessen von Kegelrädern, bei der die Bauteile mit den gleichen, nur mit einem Strich-Index versehenen Bezugszeichen entsprechend der Beschreibung zu Fig. 1 versehen sind. Hierbei ist das Zahnrad 4' ein Tellerrad, das mit Hilfe der beiden Meßräder 5' und 6', in diesem Fall Meßkegelräder, jeweils einflankig vermessen wird. Auch diese Kegelräder sind mit bekannten Meßspuren 20' und 21' auf einzelnen Zahnflanken versehen und sinngemäß so ausgelegt, daß diese eine gezielte Vermessung der Zahnflanken einzelner Zähne des zu prüfenden Tellerrades ermöglichen. Die Welle 2' des einen Meßkegelrades 5' wird erfindungsgemäß durch einen Motor 7' angetrieben. Beide anderen Wellen, die das zu prüfende Tellerrad 4' tragende Welle 1' und auch die das andere Meßkegelrad 6' tragende Welle 3' sind im dargestellten Fall mit einer Bremse 8'a und 8'b gekoppelt, die hier als Bandbremse ausgeführt ist und während der Messung ein geeignetes, etwa konstantes Bremsmoment erzeugt. Hierdurch wird ein Abheben der Zahnflanken, das zu Fehlmessungen führen würde, sicher ausgeschlossen.

Eine entsprechende konstruktive Ausführung der Meßvorrichtung für Kegelräder müßte natürlich eine geeignete Lade- und Entlademöglichkeit für das zu prüfende Tellerrad beinhalten, um dieses gegenüber den beiden Meßrädern in Meßposition bringen zu können. Der Freiraum hierfür ließe sich z.B. durch axiales Verschieben der beiden die Meßräder aufnehmenden Wellen 2' und 3' schaffen. Vorstellbar ist aber auch, die Welle 1' des zu prüfenden Rades über die beiden Wellen 2' und 3' hinaus zu verlängern, um dann das zu prüfende Tellerrad in umgekehrter Lage von oben in die Vorrichtung einzulegen und zu spannen.

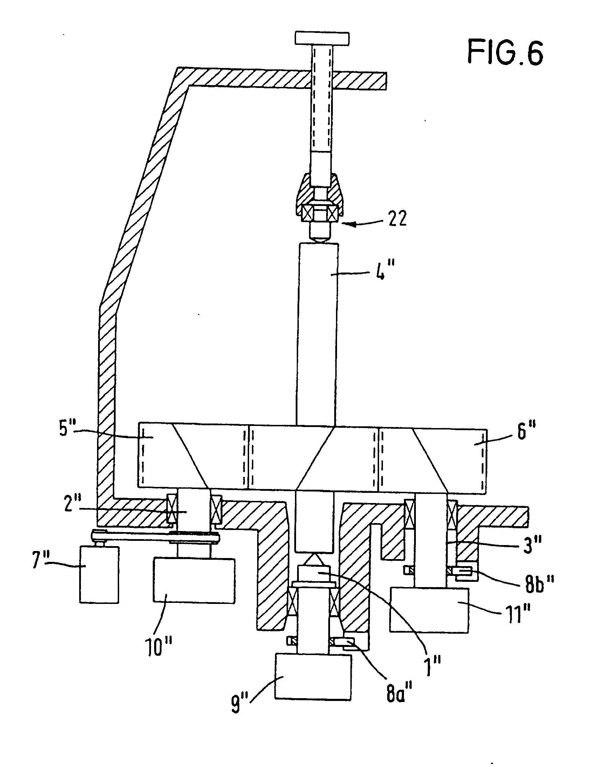

Fig. 6 zeigt als Beispiel für eine weitere Ausführungsform den Schnitt durch eine erfindungsgemäße Vorrichtung zum Vermessen von Verzahnungen, die bereits auf einer welle montiert oder fester Bestandteil dieser Welle sind. Die Bezugszeichen sind hierbei sinngemäß entsprechend denen in Fig. 1 gewählt und mit einem Doppel-Strich-Index versehen; sie werden hier nicht mehr erläutert, sofern diese nahezu identische Bauteile beschreiben. Das Bezugszeichen 4'' kennzeichnet die Welle, die die zu prüfende Verzahnung auf sich trägt. Die zu prüfende Welle 4'' wird bei der Messung zwischen der Spitze der Welle 1'', die den hochauflösenden Drehwinkelgeber 9'' trägt, und einer den Gegenhalter 22 bildenden Spitze drehbar aufgenommen. Der Gegenhalter 22 ist hierfür mehrteilig ausgeführt und mit einem entsprechenden Gegenlager versehen. Durch entsprechende Spannkräfte, die über den Gegenhalter und die Welle 4'' auf die Welle 1'' aufgebracht werden, ist eine schlupffreie Drehübertragung zwischen der zu prüfenden Welle 4 " und dem Drehwinkelgeber 9'' sichergestellt. Zum Be- und Entladen kann der Gegenhalter 22 gelöst und ggf. weggeschwenkt werden.

Die erfindungsgemäße Vorrichtung erlaubt im Prinzip die Vermessung aller bekannten Verzahnungsarten und dies in nahezu beliebigen Anordnungen.

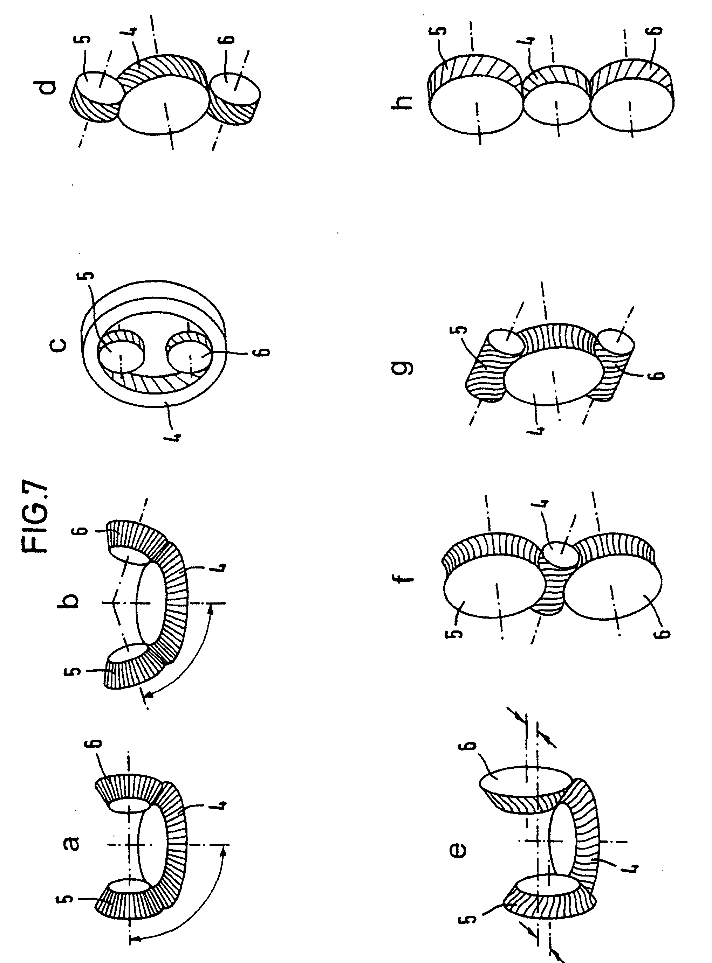

Die Figuren 7a-h zeigen eine Übersicht über mögliche Anordnungen von Meßrädern unterschieden nach Verzahnungsarten. Hierbei sind der Einfachheit halber sehr schematisch jeweils nur das zu prüfende Zahnrad 4 im Eingriff mit den beiden mit Meßspuren ausgestatteten Meßrädern 5 und 6 dargestellt. Die Fig. 7a und 7b zeigen mögliche Meßanordnungen für Kegelräder, 7c für Meßräder mit Innenverzahnung, Fig. 7d für Schraubräder, Fig. 7e für Kegelschraubräder (Hypoidräder), die Fig. 7f und 7g für Schneckenräder sowie Fig. 7h für Stirnräder mit ungleichen Meßraddurchmessern.

Es ist zu berücksichtigen, daß die Meßräder zwar entsprechend den Verzahnungsdaten zu dem zu prüfenden Zahnrad passen müssen. Die Lagen der Meßachsen gegenüber der Achse des zu prüfenden Zahnrades können hierbei aber relativ frei gewählt werden, vorausgesetzt, daß sich die Meßräder hierfür passend auslegen lassen.

Voraussetzung ist immer, daß die Achslagen der Zahnräder zueinander während der Messung fest positioniert sind, und dabei eine einflankige Anlage zwischen den Zahnrädern sichergestellt ist. Für jede dieser Anordnungen muß natürlich auch hier eine geeignete konstruktive Ausführungsform der Meßvorrichtung festgelegt werden, die eine einfache Be- und Entladung der zu prüfenden Verzahnung ermöglicht. Darüber hinaus ist für die Vermessung von Schnecken- und Schraubrädern darauf zu achten, daß keine Selbsthemmung bei der Übertragung des Drehmomentes vom großen auf das kleine Rad auftritt. Diese kann in gewissen Grenzen z.B. durch geeignete Festlegung der Zähnezahlen der Meßräder vermieden werden. Da die Auslegung der Meßräder individuell für die jeweilige Meßaufgabe erfolgt und diese unabhängig von der späteren Anordnung des zu prüfenden Zahnrades im Getriebe ist, bestehen daneben u.U. auch andere konstruktive Möglichkeiten zur Vermeidung von Selbsthemmung, wie z.B. die Wahl eines geeigneten Kreuzungswinkels zwischen den Meßrädern und dem zu prüfenden Zahnrad.

Weitere grundlegende Anordnungsmöglichkeiten ergeben sich, wenn die Meßräder entsprechend den üblichen Eingriffsverhältnissen an Verzahnungsmaschinen (z.B. Fräs- oder Schabmaschinen) gegenüber der zu prüfenden Verzahnung geschwenkt und dabei wie das entsprechende Werkzeug gestaltet werden. Zur Vermessung von Stirnradverzahnungen würde dies als Meßanordnung beispielsweise das Abwälzen zwischen den Meßrädern und dem zu prüfenden Zahnrad unter einem bestimmten Achskreuzwinkel bedeuten, wobei die Meßräder z.B. ähnlich wie Wälzfräser oder Schabräder gestaltet und für eine eindeutige Zuordnung der Meßwerte zu festen Punkten auf den Zahnflanken der zu prüfenden Verzahnung ggf. mit entsprechenden Meßspuren versehen werden müßten.

## Patentansprüche

1. Vorrichtung zum Messen der Zahnflankentopographie von Getriebeverzahnungen nach der Einflankenwälzprüfung mit einem Meßrad, welches mit einem zu prüfenden Zahnrad so abwälzbar ist, daß nur jeweils eine zahnflanke des zu prüfenden Zahnrades in Eingriff mit einem Meßrad abwälzt, und welches Eingriffs-Zahnflanken mit erhabenen Meßspuren aufweist, und mit einer Einrichtung zum Aufzeichnen und Auswerten des dabei am zu prüfenden Zahnrad (4) auftretenden Drehfehlerverlaufes (Δϕ)
**dadurch gekennzeichnet, daß**
- das zu prüfende Zahnrad (4) mit Meßspuren (20, 21) von zwei unter einem beliebigen Winkel angeordneten Meßrädern (5, 6) kämmt, von denen das eine Meßrad (5) über einen Antrieb (7) angetrieben und das andere Meßrad (6) über eine Bremseinrichtung (8) abgebremst ist,
- jedem der drei Räder (4, 5, 6) ein Drehwinkelgeber (9, 10, 11) zugeordnet ist, und
- mindestens zwei der drei Drehwinkelgeber (9, 10, 11) in einer eine Drehwinkellageerkennung ermöglichenden Weise ausgebildet sind, und
- eine Erfassungseinrichtung vorgesehen ist, mittels derer unter Berücksichtigung der beiden zwischen dem zu prüfenden Zahnrad (4) und dem jeweiligen Meßrad (5 bzw. 6) gemessenen Drehwegfehlerverläufe eine Erfassung der Zahnflankentopographien der jeweils vermessenen Rechts- und Linksflanken in Relation zu einem beliebigen gemeinsamen Bezugspunkt erfolgt.

2. Vorrichtung nach Anspruch 1,
**dadurch gekennzeichnet, daß**
- die Erfassungseinrichtung zur Bestimmung von Verzahnungsfehlern, die von den jeweils einander gegenüberliegenden Zahnflanken gemeinsam abhängen, ausgebildet ist.

3. Vorrichtung nach Anspruch 1 oder 2,
**dadurch gekennzeichnet, daß**
- das zu prüfende Zahnrad (4) über eine zusätzliche Bremseinrichtung (8'a) abgebremst wird.

4. Vorrichtung nach einem der Ansprüche 1 bis 3,
**dadurch gekennzeichnet, daß**
- einer der drei Drehwinkelgeber (9, 10, 11), vorzugsweise der Geber (9) des zu prüfenden Zahnrades (4), hochauflösend ausgebildet ist und die beiden anderen Geber (10, 11) eine der jeweiligen Meßaufgabe angepaßte geringere Impulszahl abgeben, jedoch bezüglich der Drehwinkellage der Impulse ausreichend hochgenau sind.

5. Vorrichtung nach einem der Ansprüche 1 bis 4,
**dadurch gekennzeichnet, daß**
- die Meßspuren (20, 21) derart angeordnet sind, daß mit Hilfe der gemessenen Drehwinkellagen lokalisierbare Berührbereiche der Meßspuren mit den Zahnflanken des zu prüfenden Zahnrades (4) ausgebildet werden und die einzelnen Meßspuren jedes Meßrades (5, 6) so gegeneinander versetzt angeordnet sind, daß verschiedene gegeneinander versetzte Berührbereiche der Zahnflanken des zu prüfenden Zahnrades (4) erfaßt werden.

## Claims

1. Device for measuring the tooth flank topography of gear toothing according to the single flank rolling test with a measuring wheel which can be rolled with a gear wheel to be tested in such a way that only one toothed flank of the gear wheel engages with a measuring wheel and wherein the engagement toothed flanks have measuring tracks and a device for recording and evaluating the progression of rotation defects (.....) of the gear wheel (4) that is to be tested
**characterised in that**
- the gear wheel (4) to be tested engages with measuring tracks (20, 21) of two measuring wheels (5, 6) arranged at any given angle, of which one measuring wheel (5) is driven by a drive (7) and the other measuring wheel (6) is braked,
- a rotation angle indicator (9, 10, 11) is assigned to each of the three wheels (4, 5, 6), and
- at least two of the three rotation angle indicators (9, 10, 11) are formed in a manner facilitating a rotation angle position recognition, and
- a recording device is provided, by means of which in consideration of the two rotation path error progressions measured between the gear wheel (4) to be tested and the respective measuring wheel (5 or 6) a recording of the tooth flank topography of the respectively measured right and left flanks in relation to any given common reference point is effected.

2. Device according to claim 1
**characterised in that**
- the recording device is formed for the purpose of determining toothing errors which depend in common upon the respective tooth flanks lying opposite each other.

3. Device according to claim 1 or 2
**characterised in that**
- the gear wheel (4) to be tested is braked by means of an additional braking device (8'a).

4. Device according to one of the claims 1 to 3
**characterised in that**
- one of the three rotation angle indicators (9, 10, 11), preferably the indicator (9) of the gear wheel (4) to be tested, is formed in a high resolution way and the other two indicators (10, 11) indicate a lower impulse number suited to the respective measurement, but sufficiently highly accurate in relation to the rotation angle position of the impulses.

5. Device according to one of the claims 1 to 4
**characterised in that**
- the measuring tracks (20, 21) are arranged in such a way that with the aid of the measured rotation angle positions localisable contact regions of the measuring tracks are formed with the tooth flanks of the gear wheel (4) to be tested and the individual measuring tracks of each measurement wheel (5, 6) are displaced against each other in such a way that contact regions of the tooth flanks of the gear wheel to be tested displaced in a different way against each other are recorded.

## Revendications

1. Dispositif pour mesurer la topographie des flancs des dents de dentures d'engrenages au moyen d'un contrôle par roulement sur un seul flanc, avec une roue de mesure, qui peut être roulée sur une roue dentée à contrôler de telle sorte qu'un seul flanc de dent de la roue dentée à contrôler roule chaque fois en engagement avec la roue de mesure, et qui présente des flancs de dents d'engagement avec des pistes de mesure en relief, et avec un équipement pour enregistrer et évaluer l'allure des défauts de rotation (Δϕ) apparaissant alors sur la roue dentée (4) à contrôler,
**caractérisé en ce que**
- la roue dentée (4) à contrôler engrène avec des pistes de mesure (20, 21) de deux roues de mesure (5, 6) disposées sous un angle quelconque, l'une (5) des roues de mesure étant entraînée au moyen d'un entraînement (7), et l'autre roue de mesure (6) étant freinée au moyen d'un équipement de freinage (8),
- un capteur d'angle de rotation (9, 10, 11) est associé à chacune des trois roues (4, 5, 6), et
- au moins deux des trois capteurs d'angle de rotation (9, 10, 11) sont conçus d'une manière permettant de détecter la position angulaire de rotation, et
- il est prévu un équipement d'enregistrement au moyen duquel, en tenant compte des deux allures de défauts de rotation mesurées entre la roue dentée (4) à contrôler et la roue de mesure respective (5 ou 6), l'enregistrement des topographies de flancs de dents des flancs droit et gauche respectivement mesurés s'effectue par rapport à un point de référence commun quelconque.

2. Dispositif selon la revendication 1, **caractérisé en ce que** l'équipement d'enregistrement est conçu pour déterminer les erreurs de denture qui dépendent conjointement des flancs de dents se faisant respectivement face.

3. Dispositif selon la revendication 1 ou 2, **caractérisé en ce que** la roue dentée (4) à contrôler est freinée au moyen d'un équipement de freinage supplémentaire (8'a).

4. Dispositif selon l'une des revendications 1 à 3, **caractérisé en ce qu'**un des trois capteurs d'angle de rotation (9, 10, 11), de préférence le capteur (9) de la roue dentée (4) à contrôler, est réalisé à haute résolution, et les deux autres capteurs (10, 11) délivrent un nombre d'impulsions plus faible, adapté à la tâche de mesure respective, mais sont cependant suffisamment précis quant à la position angulaire de rotation des impulsions.

5. Dispositif selon l'une des revendications 1 à 4, **caractérisé en ce que** les pistes de mesure (20, 21) sont disposées de telle sorte que, à l'aide des positions angulaires de rotation mesurées, des zones de contact localisables des pistes de mesure avec les flancs de dents de la roue dentée (4) à contrôler sont formées, et les pistes de mesure individuelles de chaque roue de mesure (5, 6) sont disposées en étant mutuellement décalées de telle sorte qu'on enregistre différentes zones de contact mutuellement décalées des flancs de dents de la roue dentée (4) à contrôler.
